# EUROPEAN PATENT APPLICATION

(11) **EP 1 659 827 A2**
(43) Date of publication of application: **24.05.2006**
(21) Application number: 05256637.9
(22) Date of filing: 26.10.2005
(51) Int. Cl.: H05B 6/66, H05B 6/68

(54) **Microwave oven for vehicle**

(30) Priority: 23.11.2004 KR 2004096544
(71) Applicant: Samsung Electronics Co., Ltd., Suwon-si, Gyeonggi-Do (KR)
(72) Inventor: Lee, Sung-ho Woonam Firstvill 2cha, Gyeonggi-do (KR)
(74) Representative: Davies, Robert Ean

(57) **Abstract**

The present invention relates to a microwave oven for a vehicle comprising a cooking chamber having a magnetron (50), the microwave oven for the vehicle further comprising: a power supplying part (10) receiving electrical power from a battery (1) for the vehicle and supplying the electrical power to the cooking chamber; a detecting part (21) detecting supply voltage of the received electric power in the power supplying part (10); and a controller (20) supplying the electric power to the cooking chamber when the supply voltage detected by the detecting part (20) is higher than a predetermined voltage by more than a predetermined amount.

Thus, a microwave for a vehicle which may be controlled to operate when an engine of the vehicle is operating, thereby preventing a battery of the vehicle from being run out of electricity.

## Description

The present invention relates to a microwave oven, and more particularly, but not exclusively, to a microwave oven for a vehicle which operates using a direct current (DC) power source.

Generally, a microwave oven is a device which is supplied with electricity and generates microwaves to heat food or other materials. Most microwave ovens use an AC power source. However, a microwave oven for a vehicle is installed in a vehicle that has a DC battery as a power source. Thus, the microwave oven for the vehicle needs to be installed with a power supplying part which has an inverter circuit to convert the DC power supplied by the DC battery into the AC power. A conventional type of electric circuitry for this kind of microwave oven for the vehicle is disclosed in Korean Patent First Publication No. 2001-58107, 2003-79546 or etc.

Because the microwave oven operates using a relatively large amount of electrical power, the DC battery in a vehicle may be rapidly discharged when the microwave oven installed in the vehicle is used. The use of a microwave oven a vehicle without operating the engine of the vehicle may result in exhausting the DC battery in the vehicle after about 15 to 30 minutes, thus making it difficult to start the engine. For this reason, it is preferable to operate the microwave oven in the vehicle on the condition that the engine is operating, which means that the DC battery is being charged by the generator according to the operation of the engine.

However, when the engine is not operating, the microwave oven for the vehicle may be used by mistake, which can lead to the exhaustion of the electrical power in the battery.

Accordingly, it is an aim of embodiments of the present invention to provide a microwave for a vehicle which may be controlled to operate when an engine of the vehicle is operating, thereby minimising the risk of a battery of the vehicle from being exhausted.

Additional aspects and/or advantages of the present invention will be set forth in part in the description which follows and, in part, will be obvious from the description, or may be learned by practice of the present invention.

According to the present invention, there is provided a microwave oven for a vehicle comprising a cooking operator having a magnetron, the microwave oven for the vehicle further comprising: a power supplying part receiving electric power from a battery for the vehicle and supplying the electric power to the cooking operator; a detecting part detecting supply voltage of the received electric power in the power supplying part; and a controller supplying the electric power to the cooking operator when the supply voltage detected by the detecting part is higher than a predetermined voltage by more than a predetermined amount.

Preferably, the controller controls the power supplying part to be turned on and off to control the supply of the electric power to the cooking operator.

Preferably, the microwave oven for the vehicle further comprises a switching circuit electrically connected to the cooking operator, wherein the controller controls the switching circuit to be turned on and off to control the supply of the electric power to the cooking operator.

Preferably, the controller comprises a display to show an inoperable state of the microwave oven for the vehicle when the supply of the electric power to the cooking chamber is shut off.

For a better understanding of the invention, and to show how embodiments of the same may be carried into effect, reference will now be made, by way of example, to the accompanying diagrammatic drawings in which:
FIG. 1 illustrates a simplified circuit diagram of a first embodiment of the present invention.
FIG. 2 is a graph showing the state of the voltage of a battery in FIG. 1.
FIG. 3 illustrates a simplified circuit diagram of a second embodiment of the present invention.

Reference will now be made in detail to embodiments of the present invention, examples of which are illustrated in the accompanying drawings, wherein like reference numerals refer to like elements throughout.

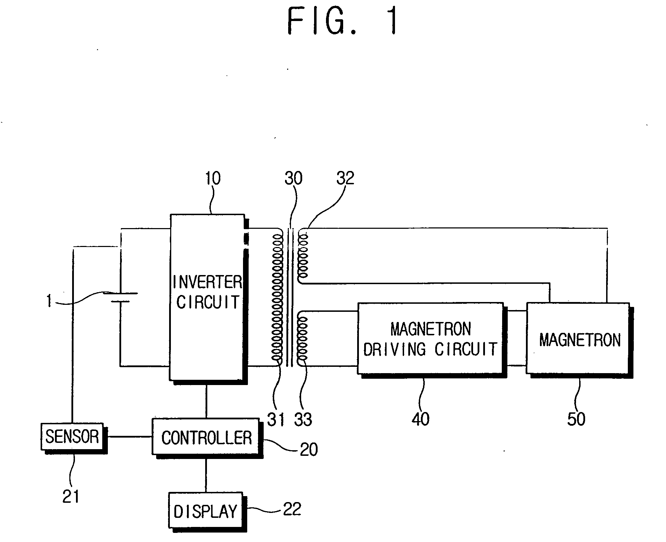

As shown in FIG. 1, a microwave oven for a vehicle according to a first embodiment of the present invention comprises an inverter circuit 10 as a power supplying part which receives DC power source from a battery 1 and converts it into AC power source; a controller 20 electrically connected to the inverter circuit 10; a high voltage transformer 30 transforming the voltage of the AC power generated by the inverter circuit 10 into a high voltage; a magnetron 50 which receives the high voltage AC power from the high voltage transformer 30 and generates microwaves; and a magnetron driving circuit 40 for driving the magnetron 50.

The high voltage transformer 30 is supplied with AC voltage in a primary coil 31, from the inverter circuit 10, thereby inducing a high AC voltage in secondary coils 32 and 33 in proportion to the winding ratio between the primary coil 31 and the respective secondary coils 32 and 33.

The magnetron driving circuit 40 comprises a high voltage diode and a high voltage capacitor. The magnetron driving circuit 40 multiplies the high AC voltage induced in the secondary coil 33 and supplies the magnetron 50 with the multiplied high AC voltage power. The magnetron 50 generates microwaves with the power supplied by the magnetron driving circuit 40. The magnetron 50 is installed in a cooking chamber (not shown) of the microwave oven and irradiates the microwaves onto the food accommodated in the cooking chamber.

The controller 20 estimates the voltage being supplied from the battery 1 by a sensor 21 electrically connected to the battery 1. By the value of the estimated voltage, the controller 20 determines whether the engine of the vehicle having the microwave oven is operating or not, and acts to turn on/off the inverter circuit 10 according to the determination. The sensor 21 as detecting part may be provided separately with respect to the controller 20, so as to detect the voltage supplied to the inverter circuit 10.

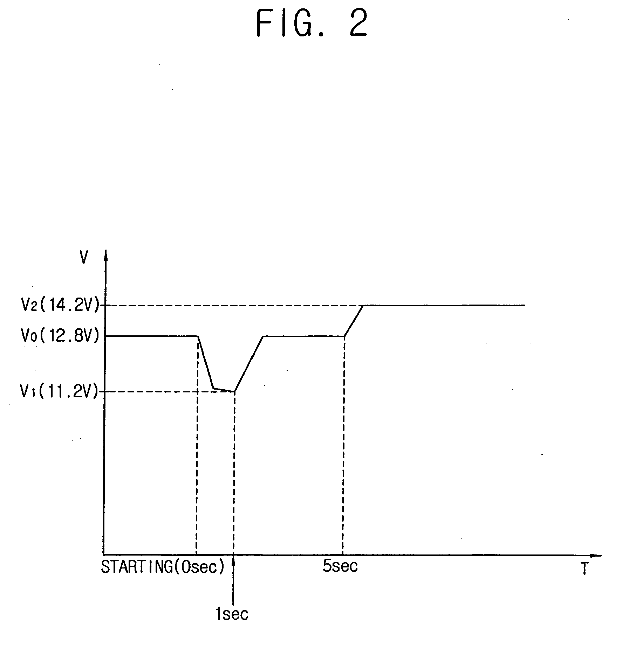

The relation between the voltage of the battery 1 and the operating state of the vehicle engine is shown in FIG. 2. Before starting the engine, the battery 1 has a constant voltage V₀ (typically 12.8(V)). When starting the engine, the voltage of the battery 1 drops momentarily to V₁ (typically 11.2(V)) by about 12%. After a few seconds (e.g. 5 seconds in FIG. 2), the voltage of the battery 1 rises up and maintains the constant value V₂ (typically 14.2(V)) according to a power supply from a generator which is about 10% higher than V₀. Therefore, it is preferable, but not necessary, to control the microwave oven to only operate at least 5 seconds after starting the engine when the voltage of the battery 1 maintains V₂ or a level higher than V₀ by a predetermined amount. The magnetron 50 may be controlled to operate only when the engine of the vehicle is operating.

Applying the above results to this embodiment of the present invention, the controller 20 may estimate the voltage of the battery 1 through the signal from the sensor 21, and electrically control the inverter circuit 10 to be turned on when the voltage of the battery 1 is higher than V₀ by more than a predetermined amount, for example, 5% of V₀. Thus, the electric AC power for operating the microwave oven may be generated by the inverter circuit 10 and be supplied to the magnetron driving circuit 40 and the magnetron 50.

However, V₀ is the voltage estimated before starting the engine in this embodiment. It may, however, be set to be a predetermined voltage, such as a rated voltage of the battery 1 (e.g. 12(V)). If V₀ is set to be the rated voltage of 12(V), the controller 20 controls the inverter circuit 10 to turn on when the voltage of the battery 1 is higher than 12.6(V).

Also, the controller 20 may further comprise a display 22 to show "not operable" or "operable after starting engine" thereon when the signal from the sensor 21 is not received by the controller 20.

The controller 20 may control the electric power to be supplied to, or shut off from, the magnetron 40 by electrically controlling other element(s) except the inverter circuit 10, for example, the magnetron driving circuit 40.

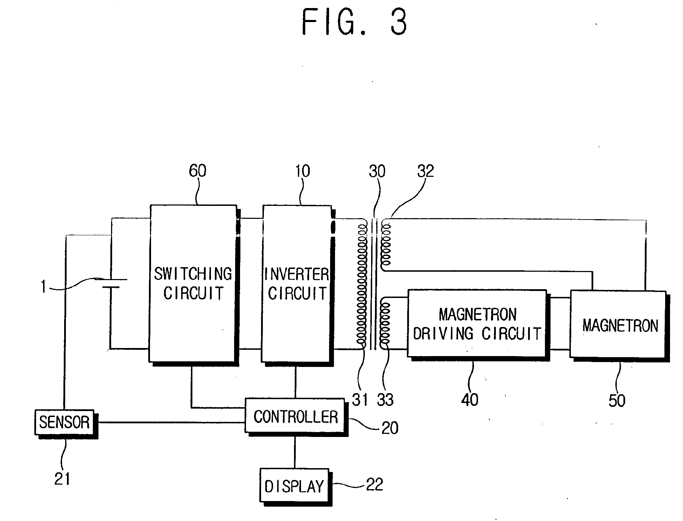

FIG. 3 shows a microwave oven for a vehicle according to a second embodiment of the present invention, which has the same constitution as the first embodiment of the present invention except that it comprises a switching circuit 60. As shown therein, the switching circuit 60 is provided between the battery 1 and the inverter circuit 10. The switching circuit 60 is controlled by the controller 20 to turn on or off in order for the supply of the electric power to the inverter circuit 10 to be controlled.

If the controller 20 receives a signal from the sensor 21, it controls the switching circuit 60 to be turned on. Thus, the operating electric power of the microwave oven is supplied to the magnetron driving circuit 40 and a magnetron 50 through the inverter circuit 10. If the controller 20 does not receive the signal from the sensor 21, it controls the switching circuit 60 to turn off.

The switching circuit 60 may be provided at any part of the circuit in FIG. 3 only if it can be used in controlling the supply of the electric power to the magnetron 50.

Although a few embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A microwave oven for a vehicle comprising a cooking chamber having a magnetron (50), the microwave oven for the vehicle further comprising:
a power supplying part (10) arranged to receive electrical power from a battery (1) for the vehicle and to supply the electrical power to the cooking chamber;
a detecting part (21) for detecting supply voltage of the received electric power in the power supplying part (10); and
a controller (20) arranged to supply the electrical power to the cooking chamber when the supply voltage detected by the detecting part (21) is higher than a predetermined voltage by more than a predetermined amount.

2. The microwave oven for a vehicle according to claim 1, wherein the controller (20) is operable to control the power supplying part (10) to be turned on and off to control the supply of the electrical power to the cooking chamber.

3. The microwave oven for a vehicle according to claim 1 or 2, further comprising a switching circuit (60) electrically connected to the cooking chamber, wherein the controller (20) is operable to control the switching circuit (60) to be turned on and off to control the supply of the electrical power to the cooking chamber.

4. The microwave oven for the vehicle according to any one of claim 1 to claim 3, wherein the controller (20) comprises a display (22) to show an inoperable state of the microwave oven for the vehicle when the supply of the electrical power to the cooking chamber is shut off.
